# EUROPEAN PATENT SPECIFICATION

(11) **EP 0 506 954 B1**
(45) Date of publication and mention of the grant of the patent: **22.05.1996**
(21) Application number: 92902575.7
(22) Date of filing: 15.10.1991
(51) Int. Cl.: B01D 33/04, B01D 33/80

(54) **CONTINUOUS FILTER**
KONTINUIERLICHES FILTER
FILTRE CONTINU

(30) Priority: 18.10.1990 US 600035
(43) Date of publication of application: 07.10.1992
(73) Proprietor: THE DOW CHEMICAL COMPANY, Midland, Michigan 48640 (US)
(72) Inventor: KEILLOR, Peter, T., III, West Columbia, TX 77486 (US); KIRKSEY, William, A., Midland, MI 48640 (US)
(74) Representative: Casalonga, Axel
(86) International application number: US9107717
(87) International publication number: WO9206763

(56) References cited:
- JP-A-52 048 171
- US-A- 2 016 991
- US-A- 2 675 129
- US-A- 3 471 017
- US-A- 3 645 399
- US-A- 3 856 674
- US-A- 3 856 680
- US-A- 3 940 335
- US-A- 4 842 750
- US-A- 4 849 113
- US-A- 5 041 222

## Description

This invention relates to a process and apparatus for filtering a substance flowing through a passage by introducing a filter across the passage, and, more particularly, to an improved method and apparatus for the filtering of heat-softened plastics materials.

It is often necessary to purify molten polymers or resins, having a viscosity of at least 0.1 kg.m⁻¹.s⁻¹ (100 cp), during processing when impurities are present in unacceptable concentrations. This is usually accomplished by straining the thermally softened polymers through a filter medium, usually downstream of an extruder. Such straining can take place in the same barrel used for the extrusion process or in a device completely independent of the extruder. The device of this invention can also be used in a process without regard to whether the processing includes extrusion.

In time, the filter medium becomes clogged and must be replaced. Opening up the extruder in order to replace the filter interrupts the production and considerably inconveniences the operators who risk coming in contact with the potentially hot and sticky melt in the process of replacing or cleaning the clogged filter. Whether the clogged filter is replaced or cleaned depends on the filter material and the nature of the material being filtered.

The filter medium is usually configured in the form of a screen. A large variety of screen filter devices is available on the market or described in the literature. The devices can be classified into two broad categories -- screen changing devices and continuous devices.

It is well known that some of the dangers and inefficiencies inherent in the changing of a screen filter can be alleviated by employing two or more screens, each mounted on separate mountings, so that when one screen filter becomes clogged, a clean screen filter can quickly be inserted to replace the clogged screen filter. The switchover is achieved either by incorporating the several screen filter in a slide or similar device which can be periodically reciprocated or rotated so as to allow a new screen filter to replace a clogged one, or by redirecting the flow from a clogged screen filter to a clean screen filter by means of a valve or similar device. A number of specific screen filter changing devices and mechanisms are described in U.S. Patent No. 4,842,750.

A problem often associated with screen filter changing devices is the interruption of the melt flow during the screen filter changing. This interruption has a number of undesirable effects. First, the interruption of what would otherwise be a continuous process turns the process into a batch process, with all the attendant disadvantages of batch processes, such as lack of uniformity of product and conditions, dynamics in the system, increased requirement of operator attention and involvement, and reduced reliability. In addition, the operators are forced to handle the clogged screen filters which are coated with hot, viscous, and sticky melts. Since the screen filter is taken off-line during the screen filter changes, a larger screen filter area, typically in the form of multiple screen filters, must be used in order to accommodate the melt through-flow. Furthermore, an inferior product is produced. Since the quality and dimensional stability of the extrudate are directly related to the pressure variation at the screen filter, it is usually desired that the pressure at the screen filter be constant and not vary cyclically with the changing of the screen filters.

Many screen filter changing devices call for monitoring the pressure drop across the screen filter and effectuate the changing of the screen filters when the pressure drop reaches a certain preset value. This mode of operation results in a monotonically increasing pressure drop across the screen filter as the screen filter becomes progressively more clogged, followed by a sudden drop in a differential pressure as the clogged screen filter is removed and a clean screen filter is put in place. The pressure then again proceeds to increase monotonically as the new screen filter becomes more clogged, and so on. The effect of this varying pressure differential on the quality and dimensional stability of the extrudate is usually detrimental.

In order to avoid many of the problems associated with screen filter changers, devices have been proposed, and in some cases commercialized, which replace individual discrete screen filters with screen filters in the form of continuous strips which can be advanced when a section becomes dirty. These constantly operating filters have a number of advantages over screen filter changing devices. Among these are the following: 1) the continuous screen filters, because they allow for essentially constant throughflow, require a smaller screen area; 2) the continuous screen filters are more conducive to small and compact design; 3) the continuous screen filters produce constant conditions in the melt channel; and, 4) the continuous screen filters allow for uniform throughflow.

A number of specific continuous filter devices and mechanisms are described in U.S. Pat. No. 4,849,113.

Unfortunately, the use of long strips of filter media raises sealing problems, since the mechanism for holding a filter medium in place must periodically be released so as to allow the filter strip to be advanced. Such a release allows the melt, which is under high pressure, to escape to the outside. This results in loss of material and in a messy and potentially dangerous operating environment.

A number of devices incorporating a long strip of filter medium are known. Each strives to solve the sealing problem. U.S. Patent No. 2,867,324 discloses a method of sealing a continuous filter which includes inflatable sealing tubes. In the inflated condition, these tubes bear under pressure on both sides of the filter medium. When deflated, the sealing tubes allow the filter medium to be advanced a predetermined amount. The tubes are then reinflated to fix the filter medium in place. The operation is intermittent and the design is not likely to be reliable in commercial operations. It is perhaps for this reason that such filters have yet to appear on the market.

Another way of handling the sealing problem is displayed by the various Kalman filters. U.S. Patent Nos. 3,471,017; 3,645,399; 3,856,674; 3,940,335 and 3,856,680 which disclose variations on a continuous filter traveling from a feed spool to a takeup spool. The sealing of the filter medium is accomplished primarily by alternately cooling and heating the outlet and inlet ports of the filter so as to alternately freeze and thaw the melt around the inlet and outlet ports. The frozen material around the ports keeps the melt from escaping to the outside. When it is desired to advance the filter medium, the ports are heated to partially melt the seal and to allow the filter to be advanced toward the takeup spool.

Although certain of these latter filters are available commercially, they have various limitations. The reliance on the plugs of solidified material to seal the filter has not been justified, especially for the lower viscosity melts such as epoxy reins. The filters work best for thermoplastic materials having a wide melting temperature range. Typically epoxy resins are much more uniform and tend to display a relatively narrow range of freezing points.

Operation of these latter filters are difficult since, in order to insure a seal, the plugs must be cooled sufficiently to form a relatively solid mass. This mass tends to bind to the inlet and outlet ports, making filter advancement difficult. If the plugs are not completely solidified, leakage of melt material occurs. In addition to requiring very precise and careful control, it has been found that many materials cannot be handled by such filters. For example, materials which are lower in viscosity will not solidify quickly enough or at high enough temperatures to make the operation of the filter efficient.

In addition, such filters do not function properly where the material to be filtered lacks self-lubricating properties since such materials would adhere strongly to the filter body and cannot easily be separated from the filter body to allow filter movement. Also, devices require high strength filter media such as a metal screen and are unlikely to function properly with certain desirable synthetic aramid fiber filter media such as Nomex™ or Kevlar™. These devices are also unlikely to function well with other flexible woven matted fabric filter media such as cloth, nylon, and rayon.

U.S. Patent No. 4,842,750 discloses a continuous filter for the filtering of viscous material which discretely feeds a filter medium from a feed spool to a takeup spool based on the differential pressure across the filter. When the filter medium is to be moved, a mechanism is activated which momentarily increases the volume just upstream of the filter. This reduces the pressure on the filter and enables the filter medium to be moved, thereby exposing the new filter medium and removing the clogged filter. Operation of this device is discontinuous.

U.S. Patent No. 4,849,113 to Hills discloses a polymer filter having two filtering chambers, each with its own associated feed spool and takeup spool. The device is activated by differential pressure across the filters. A three way valve upstream of the filter is intermittently positioned so as to reduce the polymer flow into one of the two chambers and thereby reduce the pressure on the filter associated with that chamber. This allows the filter to be pulled through the housing, exposing new filter area to the polymer.

This device, like the other continuous devices described above, is not capable of truly continuous operation. While the filter medium in each case is a long strip which is, in theory, capable of continuous movement, in practice, each of the above devices uses a set of discrete movements, usually controlled by filter pressure drop, to move the filter medium incrementally through the filtering device.

US-A-2 675 129 discloses a filter useful in the manufacture of paints, enamels, varnishes, lacquers, and the like.

There has long been a need for a continuous melt filter capable of: operating on a truly continuous basis, and thus capable of maintaining fixed conditions in the melt being filtered; filtering melts which are not self-lubricating; filtering melts without excessive leakage of melt material to the outside; and filtering less viscous melts such as epoxy resins.

Accordingly, it is an object of the present invention to provide an improved method and apparatus for the filtration of fluid materials, and especially heat-softened polymeric materials, which allows for the consistent and continuous production of a purified polymeric material.

It is a further object of the present invention to provide an improved continuous filter wherein an increase in pressure caused by the clogging of the filter with impurities is detected so that the rate of advancement of the filter may be adjusted to maintain a relatively constant pressure drop across the filter over a long period of filtration time.

It is also an object of the present invention to provide a filtration device capable of filtering melts having a wide range of viscosities.

Another object of the present invention is to provide an improved filter capable of handling a wide range of filter media.

The above and other objects of the present invention are achieved, according to a preferred embodiment thereof, by providing a continuous filter employing roller seals to seal the filter medium and prevent leakage of the melt to the outside.

The invention is of a filter in which a strip of filter medium is continuously fed through the filter body. More particularly, in one embodiment, the present invention provides an improved filter assembly comprising a supply storage section adapted to receive and store a web of filter medium in roll form, a melt treating section through which the filter medium is advanced, and a rewind section including a takeup spool to rewind the filter medium in roll form. The rate of movement of the filter medium through the filter body is controlled so as to keep the pressure drop across the filter at a relatively constant value. The filter body is equipped with roller seals to prevent the escape of melt from the filter. The filter medium is moved through the filter body either by driven seal rollers or through the action of a drive takeup roll. The filter is supported internally by a backup plate.

One advantage of the present invention is that, unlike previously known continuous filters which only approximate continuous filter medium movement through a series of discrete displacements of the medium, movement of the filter medium through the filter body can be truly continuous so as to more easily and effectively maintain a desired pressure drop across the filter.

Another advantage of the present invention is that the roller sealed device of this invention allows less melt to leak to the outside than do previously known devices. The reduced leakage of resin raises the process yield, reduces labor requirements, and enhances process safety.

Yet another advantage of the present invention is that the roller sealed device of this invention is capable of filtering materials, such as epoxy resins, which, because of their lower viscosities and relatively sharp melting point, could not be efficiently handled by previously known devices due to excessive leakage of melt to the outside.

Another potential advantage of the roller sealed filter of the present invention is that it makes possible the removal of high concentrations of impurities without the excessive yield losses which would be encountered in a melt sealed device.

The invention provides an apparatus for filtering contaminants from a material comprises :
(a) a housing ;
(b) a passage in the housing through which the material can be made to pass, the passage having an inlet and an outlet port ;
(c) a band of a filtering medium movably disposed across the passage whereby the material flowing through the passage - from the inlet port to the outlet port flows through a portion of the filter band, such passage effecting the filtering of the material ; and
(d) roller means disposed about the filtering medium for sealing the portion of the filter band through which the material flows.

According to the invention, roller seals are provided to seal the filter medium, the roller means being mounted in movable carriages and an elastomeric sealing means for sealing the carriages to the housing.

This invention also resides in a process for filtering contaminants from a material, comprising the steps of feeding the material into the passage through the housing of the above described apparatus and flowing the material after it is filtered from the housing.

The present invention recognizes and addresses the previously mentioned, long-felt needs and provides a satisfactory meeting of those needs in its various embodiments. To one of skill in this art who has the benefits of this invention's teachings and disclosures, other and further objects and advantages will be clear, from the following description of the preferred embodiments, given for the purpose of disclosure, when taken in conjunction with the accompanying drawings.

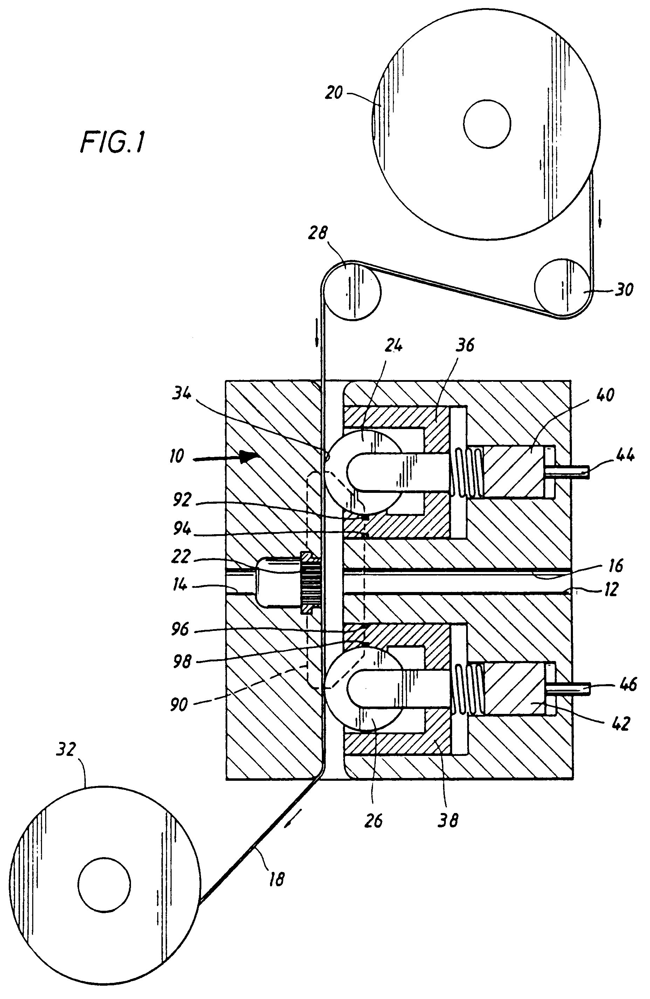

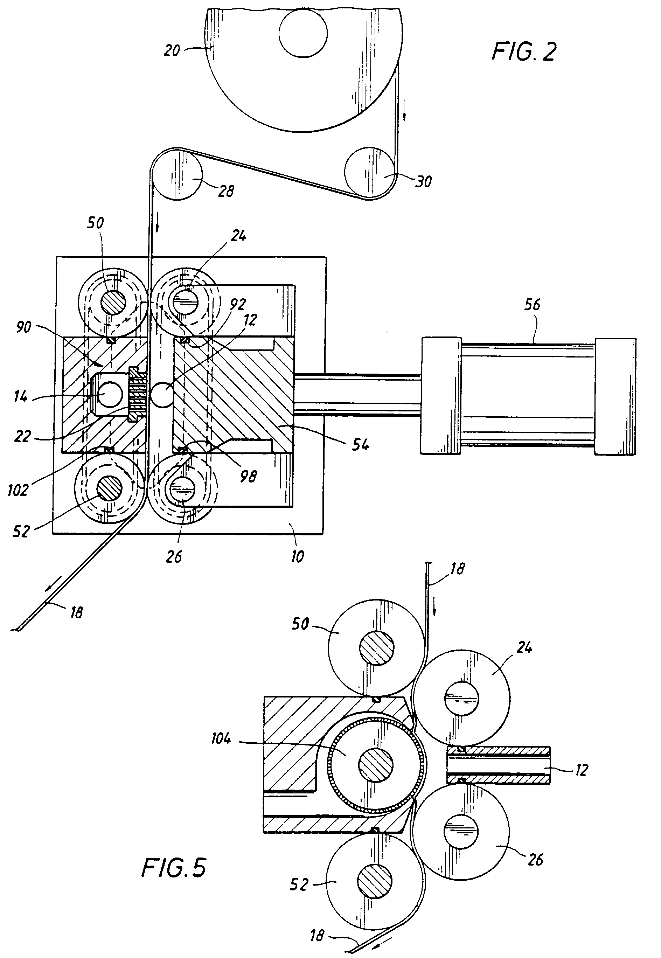

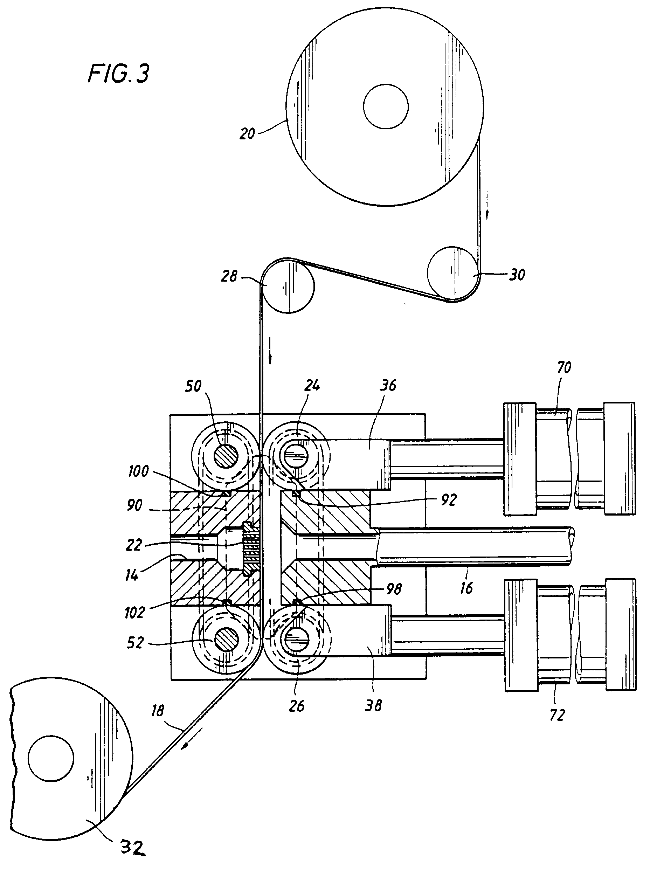

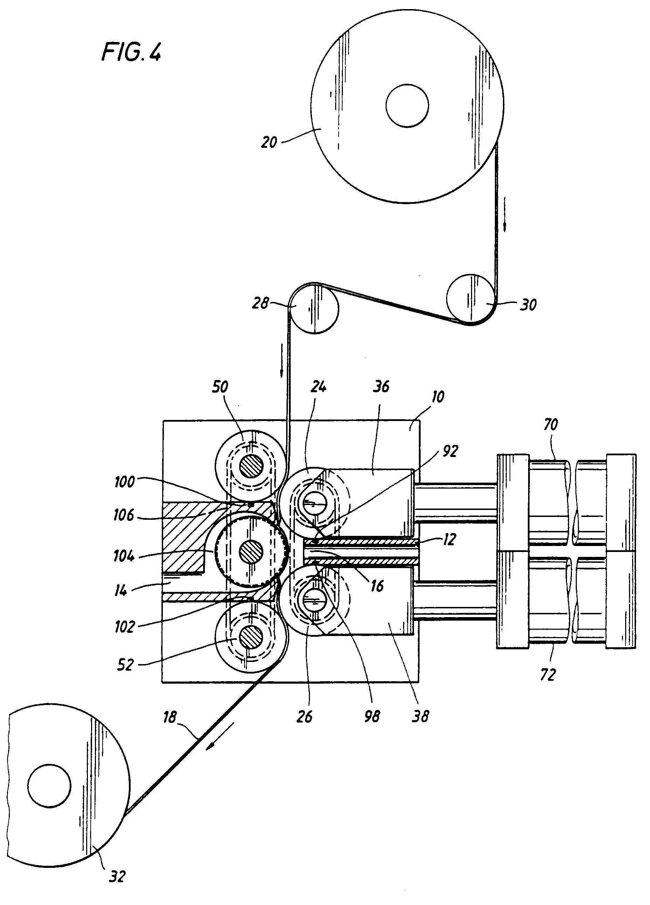

The above and other embodiments of the present invention may be more fully understood from the following detailed description when taken together with the accompanying drawings. Figure 1 is a view of the continuous filter showing the seal rollers operating against a flat surface. Figure 2 is a view of the continuous filter showing the seal rollers operating jointly against stationary seal rollers. Figure 3 is a view of the continuous filter showing the seal rollers operating independently against stationary seal rollers. Figure 4 is a view of the continuous filter showing the device of Figure 3 with the addition of a rotary filter support. Figure 5 is a blow-up view of the continuous filter with the rotary support.

Referring now to the drawings, the figures illustrate preferred embodiments of the present invention of the continuous filter. The continuous filter comprises an apparatus for filtering contaminants from a heat-softened material which comprises a filter body or housing 10. The housing 10 would typically be located just downstream of or as part of the barrel of an extruder, but could also be used in a process which does not include an extruder. Material to be filtered enters the filter from one end through an inlet port 12, and is made to flow under pressure. The filter housing 10 is provided with an opposed outlet port 14 flanking the melt flow passage 16.

A filter band 18 of substantial length made of an appropriate filtering medium is provided on a filter medium feed roll 20. Various filtering media may be employed. The appropriate material is selected in view of the type of melt being filtered, the nature and concentration of the expected impurities to be filtered out, the desired filtration efficiency, the temperature of the melt, and other factors normally used in selecting a filtering medium.

The filter band 18 enters and leaves the filter housing 10 approximately perpendicular to the direction of flow of the melt. The filter band 18 is supported inside the melt flow passage 16 by a filter support plate 22. The filter band 18 is passed across the melt flow passage 16 so that the melt is forced to flow through the filter thereby becoming cleansed of any contaminants contained therein.

Located inside the filter housing 10 are a top seal roller 24 and a bottom seal roller 26 which serve to positively seal the device from the outside and preclude leakage of the material being filtered from the apparatus.

The direction of movement of the filter band 18 is, for convenience, described throughout as being from top to bottom where the top seal roller 24 is the seal roller though which the clean filter band enters the device. The device of this invention could also be operated by passing the filter band 18 through the device in an upward direction. Similarly, the device could be disposed horizontally so that the filter band moves horizontally.

Thus, while various elements of the device are described throughout as being related to the top or bottom of the device, "top" merely signifies the filter band inlet and "bottom" merely signifies the filter band outlet regardless of the actual orientation of the device.

It is preferred that the movement of the filter band 18 be from top to bottom because this will reduce the probability of the melt and filtered materials falling back onto the device from the filter band exiting the device.

Although a single pair of seal rollers is shown, it is within the scope of this invention to have additional seal rollers inside or outside of the filter. For example, guide rollers 28 and 30, or similar means, can be used outside the filter housing 10 to facilitate the feeding of the clean filter medium. Similar rollers (not shown) can be used to assist in the taking up of the used filter band.

The used filter medium is mounted after its exit from the filter housing 10 on a windup roll 32. The windup roll 32 is capable of taking up the filter medium 18 leaving the filter housing 10 for subsequent disposal or cleaning of the filter mechanism for reuse.

In another embodiment, not shown in the drawing, the filter medium feed roll 20 and windup roll 32 are eliminated in a process wherein the filter band 18 forms a single endless band which is continuously fed into the filter housing 10 and which, upon exiting the filter housing 10 undergoes a regeneration process which cleans the filter and prepares it for reuse.

The seal rollers 24 and 26 may or may not be independently driven. When they are driven, the seal rollers 24 and 26 serve to conduct the filter band 18 through the device. When the seal rollers 24 and 26 are not driven, the filter band 18 is pulled through the filter housing 10 by the action of the windup roll 32.

The seal rollers can work against a flat surface 34, pinching the filter band 18 between the surface of the seal rollers, 24 and 26, and the opposing flat surface 34, as is shown in Figure 1. Alternatively, and preferably, the seal rollers 24 and 26 can work against a top fixed seal roller 50 and a bottom fixed seal roller 52, pinching the filter band 18 between the surfaces of the seal rollers 24 and 26 and the fixed seal rollers 50 and 52, respectively, as is shown in Figure 2.

The seal rollers may be solid as shown in the Figures, or they may be grooved with grooves running parallel to the axis of the rollers. It may be beneficial for the rollers to be grooved, especially the rollers at the filter band outlet. This would tend to facilitate the removal of any contaminants from the system. The contaminants may be accommodated in the interstices between the grooves whereas a solid seal roller would tend to compress the contaminants, and may cause the contaminants to stay in the device, thus clogging the device and preventing the proper removal of the contaminants.

It is preferred that the seal rollers 24 and 26 be driven, while the windup roll 32 serve merely to take up the slack filter band 18 exiting the filter housing 10. In the preferred embodiment, the seal rollers 24 and 26 work against fixed seal rollers 50 and 52, respectively, pinching the filter band 18 between the surface of the seal rollers 24 and 26 and the fixed rollers 50 and 52. The two seal rollers 24 and 26 are driven at approximately the same speed. Preferably, the bottom seal roller 26 is driven at a slightly higher speed than the top seal roller 24 so as to keep the filter band 18 in tension.

The rate at which the filter band 18 is driven, either by the windup roll 32, or, preferably, by the seal rollers 24 and 26, is automatically controlled as a function of the differential pressure in the melt flow passage 16 across the filter. A pair of pressure sensors, not shown in the drawing, one located upstream of the filter and the other located downstream of the filter, are provided to measure the melt pressures upstream and downstream of the filter. Calculations are made of the differential pressure, an appropriate rate of movement of tee filter medium is determined, and the driving of the filter medium is controlled to operate in such a way as to ensure the appropriate rate of filter medium movement.

In an alternative and preferred control scheme, the rate at which the filter band 18 is driven is set at some convenient value and the differential pressure across the filter band 18 is maintained at a desired value not through varying the speed of the filter band 18 but rather by varying the size of the gap through which the filter band 18 leaves the filter housing 10.

The seal rollers 24, 26, 50 and 52 can be constructed of any suitable materials, preferably metal, and are mounted in carriages. Figure 1 shows an embodiment wherein the top seal roller 24 is mounted in a top roller carriage 36 while the bottom seal roller 26 is mounted in a bottom roller carriage 38. The top carriage 36 is driven by a top carrier loading bar 40 and a top guide rod 44. The bottom carriage 38 is driven by a bottom carriage loading bar 42 and a bottom guide rod 46. The side view of Figure 1 only shows a single guide rod 46. In practice, a plurality, typically four, horizontally oriented guide rods 46 would be used.

Figure 2 shows an embodiment wherein both seal rollers 24 and 26 are mounted in an inlet body having roller carriages 54 with both seal rollers being jointly actuated through a single positioner 56.

Figure 3 shows yet another embodiment wherein the top seal roller 24 is mounted in a top roller carriage 36 while the bottom seal roller 26 is mounted in a bottom roller carriage 38 as in Figure 1, but where the top roller carriage 36 is actuated by a top seal positioner 70 while the bottom roller carriage 38 is actuated by a bottom seal positioner 72.

In another embodiment of the present invention, shown in Figures 4 and 5, a rotary filter support 104 is interposed between the two fixed rollers 50 and 52. The resin to be filtered passes through the filter medium 18 and through the rotary filter support 104. The rotary filter support 104 may or may not be driven. The driving, if any, of the rotary filter support 104 can be accomplished through use of a drive chain 106. This configuration tends to reduce the drag on the filter cloth. The rotary filter support 104 would typically move at the same speed as the filter medium 18 thereby reducing or eliminating the drag that would otherwise result.

The various carriages as sealed with elastomeric seals using customary and generally known sealing techniques. For example, the carriages 36 and 38 are sealed with elastomeric material to the filter housing 10 with a side seal 90. Shown in Figure 1 are the top and bottom roller seals 92 and 98, respectively. Also shown are the top and bottom carriage seals 94 and 96, respectively. In Figure 4 the top and bottom fixed roller seals 100 and 102, respectively, can also be observed.

## Claims

1. An apparatus for filtering contaminants from a material comprising :
(a) a housing (10);
(b) a passage (16) in the housing through which the material can be made to pass, the passage having an inlet and an outlet port (12, 14);
(c) a band (18) of a filtering medium movably disposed across the passage whereby the material flowing through the passage from the inlet port to the outlet port flows through a portion of the filter band, such passage effecting the filtering of the material ; and
(d) roller means (24, 26) disposed about the filtering medium for sealing the portion of the filter band through which the material flows, characterized by roller seals (92, 98) to seal the filter medium, the roller means (24, 26) being mounted in movable carriages (36, 38) and an elastomeric sealing means (90, 94, 96) for sealing the carriages to the housing.

2. The apparatus of Claim 1, characterized by a feed roll for feeding the filter band across the passage, and a take-up roll for taking up the filter band from the passage.

3. The apparatus of Claim 1 or 2, characterized by the fact that the roller means comprises a pair of seal rollers (24,26) disposed on opposite sides of the passage (16), and said housing having a flat surface opposite the seal rollers.

4. The apparatus of Claim 1 or 2, characterized by the fact that the roller means comprises a top and a bottom set of rollers, each set including a seal roller (24,26) and a fixed roller (50,52), each set being disposed at opposite sides of the passage.

5. The apparatus of Claim 2, characterized by means for determining the differential pressure across the filter band in the passage, and means for controlling the speed of the feed roll to maintain a constant differential pressure across the filter band in the passage.

6. The apparatus of Claim 3, characterized by pressure sensing means for determining the differential pressure across the filter band in the passage, and means for controlling the separation between the seal rollers and the flat surface to maintain a nearly constant differential pressure across the filter band in the passage.

7. The apparatus of Claim 4, characterized by pressure sensing means for determining the differential pressure across the filter band in the passage, and means for controlling the separation between the bottom seal roller and the bottom fixed roller to maintain a nearly constant differential pressure across the filter band in the passage.

8. The apparatus of any one of the preceding claims, characterized by the fact that the material is a heat-softened polymeric material having a viscosity of from 0.2 to 30 kg.m⁻¹.s⁻¹ (200 cp to 30,000 cp).

9. The apparatus of Claim 3 or 4, characterized by the fact that at least one of the rollers is grooved.

10. The apparatus of Claim 3 or 4, characterized by the fact that a rotary filter support is mounted intermediate between the top and bottom seal rollers.

11. A process for filtering contaminants from a material, characterized by comprising the steps of feeding the material into the passage through the housing of the apparatus as claimed in claim 1 and flowing the material after it is filtered from the housing.

12. The process of Claim 11, characterized by the step of sensing the differential pressure across the filter band in the passage and controlling the speed of the filter band to maintain a nearly constant differential pressure across the filter band in the passage.

13. The process of Claim 11, characterized by the step of determining the differential pressure across the filter band in the passage and controlling the speed of the seal roller means to maintain a constant differential pressure across the filter band in the passage.

14. The process of Claim 11, characterized in that the roller means comprises a pair of seal rollers disposed on opposite sides of the passage and a member having a flat surface mounted opposite the seal rollers, including the step of sensing the differential pressure across the filter band in the passage and controlling the separation between the seal rollers and the flat surface to maintain a constant differential pressure across the filter band in the passage.

15. The process of Claim 11, characterized in that the roller means comprises a top and a bottom set of rollers, each set including a seal roller and a fixed roller, each set of rollers being disposed at opposite sides of the passage, including the step of sensing the differential pressure across the filter band in the passage and controlling the separation between the bottom seal roller and the bottom fixed roller to maintain a constant differential pressure across the filter band in the passage.

16. The process of Claim 11, characterized in that the material is heat-softened polymeric material having a viscosity of from 0.2 to 30 kg.m⁻¹.s⁻¹ (200 cp to 30,000 cp).

17. The process of Claim 14 or 15, characterized in that at least one of the rollers is grooved.

## Patentansprüche

1. Vorrichtung zum Filtern von Verunreinigungen aus einem Material , bestehend aus:
(a) einem Gehäuse (10);
(b) einem Kanal (16) im Gehäuse, durch den das Material laufen kann, wobei der Kanal eine Ein- und eine Auslaßöffnung (12, 14) hat;
(c) einem Band (18) aus einem Filtermedium, das über dem Kanal beweglich angeordnet ist, so daß das durch den Kanal von der Einlaßöffnung zur Auslaßöffnung strömende Material durch einen Teil des Filterbandes strömt, wobei dieser Durchlauf das Filtern des Materials bewirkt; und
(d) einer Rollenanordnung (24, 26) zum Abdichten des Teils des Filterbandes, durch den das Material strömt.
**gekennzeichnet durch**
Dichtrollen (92, 98), um das Filtermedium abzudichten, wobei die Rollenanordnung (24, 26) in beweglichen Schlitten (36, 38) gelagert ist, und eine elastomere Dichtungsanordnung (90, 94, 96) zum Abdichten der Schlitten gegen das Gehäuse.

2. Vorrichtung nach Anspruch 1,
**gekennzeichnet durch**
eine Vorratsrolle zum Zuführen des Filterbandes über den Kanal, und eine Aufwickelrolle zum Aufnehmen des Filterbandes aus dem kanal.

3. Vorrichtung nach Anspruch 1 oder 2,
**dadurch gekennzeichnet, daß**
die Rollenanordnung ein Paar Dichtrollen (24, 26) aufweist, die auf gegenüberliegenden Seiten des Kanals (16) angeordnet sind, und daß das Gehäuse eine flache Fläche gegenüber den Dichtrollen hat.

4. Vorrichtung nach Anspruch 1 oder 2,
**dadurch gekennzeichnet, daß**
die Rollenanordnung einen oberen und einen unteren Satz Rollen hat, und daß jeder Satz eine Dichtrolle (24, 26) und eine feste Rolle (50, 52) aufweist, wobei jeder Satz auf gegenüberliegenden Seiten des Kanals angeordnet ist.

5. Vorrichtung nach Anspruch 2,
**gekennzeichnet durch**
eine Einrichtung zur Bestimmung des Differentialdruckes über dem Filterband im Kanal, und eine Einrichtung zur Steuerung der Geschwindigkeit der Vorratsrolle, um einen konstanten Differentialdruck über dem Filterband im Kanal aufrechtzuerhalten.

6. Vorrichtung nach Anspruch 3,
**gekennzeichnet durch**
eine Drucksensoranordnung zur Bestimmung des Diffentialdruckes über dem Filterband im Kanal, und eine Anordnung zur Steuerung der Trennung zwischen den Dichtrollen und der flachen Fläche, um einen etwa konstanten Differentialdruck über dem Filterband im Kanal aufrechtzuerhalten.

7. Vorrichtung nach Anspruch 4,
**gekennzeichnet durch**
eine Drucksensoranordnung zur Bestimmung des Differentialdruckes über dem Filterband im Kanal, und eine Einrichtung zur Steuerung der Trennung zwischen der unteren Dichtrolle und der unteren festen Rolle, um einen etwa konstanten Differentialdruck über dem Filterband im Kanal aufrechtzuerhalten.

8. Vorrichtung nach einem der vorhergehenden Ansprüche,
**dadurch gekennzeichnet, daß**
das Material ein warmerweichtes polymeres Material ist, das eine Viskosität von 0,2 bis 30 kg . m⁻¹ . ^{s-1} (200 cp bis 30.000 cp) hat.

9. Vorrichtung nach Anspruch 3 oder 4,
**dadurch gekennzeichnet, daß**
wenigstens eine der Rollen genutet ist.

10. Vorrichtung nach Anspruch 3 oder 4,
**dadurch gekennzeichnet, daß**
eine Drehfilterhalterung zwischen der oberen und der unteren Dichtrolle gelagert ist.

11. Verfahren zum Filtern von Verunreinigungen aus einem Material,
**gekennzeichnet durch**
die Schritte der Zufuhr des Materials in einem Kanal durch das Gehäuse der Vorrichtung nach Anspruch 1 und das Ausströmen des Materials nach Filterung aus dem Gehäuse.

12. Verfahren nach Anspruch 11,
**gekennzeichnet durch**
den Schritt des Ermittelns des Differentialdruckes über dem Filterband im Kanal und der Steuerung der Geschwindigkeit des Filterbandes, um einen etwa konstanten Differentialdruck über dem Filterband im Kanal aufrechtzuerhalten.

13. Verfahren nach Anspruch 11,
**gekennzeichnet durch**
den Schritt der Bestimmung des Differentialdruckes über dem Filterband im Kanal und der Steuerung der Geschwindigkeit der Dichtrollenanordnung, um einen konstanten Differentialdruck über dem Filterband im Kanal aufrechtzuerhalten.

14. Verfahren nach Anspruch 11,
**dadurch gekennzeichnet, daß**
die Rollenanordnung ein Paar Dichtrollen aufweist, die auf gegenüberliegenden Seiten des Kanals angeordnet sind, sowie ein Teil mit einer flachen Fläche, das gegenüber den Dichtrollen angeordnet ist, umfassend den Schritt der Ermittlung des Differentialdruckes über dem Filterband im Kanal und der Steuerung der Trennung zwischen den Dichtrollen und der flachen Fläche, um einen konstanten Differentialdruck über dem Filterband im Kanal aufrechtzuerhalten.

15. Verfahren nach Anspruch 11,
**dadurch gekennzeichnet, daß**
die Rollenanordnung einen oberen und einen unteren Satz Rollen aufweist, wobei jeder Satz eine Dichtrolle und eine feste Rolle aufweist, jeder Satz Rollen auf gegenüberliegenden Seiten des Kanals angeordnet sind, umfassend den Schritt der Ermittlung des Differentialdruckes über dem Filterband im Kanal und der Steuerung der Trennung zwischen der unteren Dichtrolle und der unteren festen Rolle, um einen konstanten Differentialdruck über dem Filterband im Kanal aufrechtzuerhalten.

16. Verfahren nach Anspruch 11,
**dadurch gekennzeichnet, daß**
das Material ein wärmeerweichtes polymeres Material ist, das eine Viskosität von 0,2 - 30 kg . m⁻¹ . s⁻¹ (200 cp bis 30.000 cp) hat.

17. Verfahren nach Anspruch 14 oder 15,
**dadurch gekennzeichnet, daß**
wenigstens eine der Rollen genutet ist.

## Revendications

1. Appareil pour filtrer des contaminants d'un matériau, qui comprend :
(a) un boîtier (10),
(b) un passage (16) dans le boîtier par lequel on peut faire passer le matériau, ce passage ayant des orifices d'entrée et de sortie (12, 14),
(c) une bande (18) de milieu filtrant placée de façon mobile en travers du passage de telle sorte que le matériau s'écoulant par le passage, de l'orifice d'entrée à l'orifice de sortie, traverse une partie de la bande de filtre, ce passage provoquant la filtration du matériau, et
(d) des moyens formant rouleaux (24, 26) disposés autour du milieu filtrant pour sceller la partie de la bande de filtre que traverse le matériau,
caractérisé par des joints de rouleaux (92, 98) pour étanchéifier le milieu filtrant, les moyens formant rouleaux (24, 26) étant montés dans des chariots mobiles (36, 38) et un moyen d'étanchéité en élastomère (90, 94, 96) scellant les chariots au boîtier.

2. Appareil selon la revendication 1, caractérisé par une bobine débitrice pour amener la bande de filtre en travers dudit passage et une bobine réceptrice pour récupérer la bande de filtre sortant du passage.

3. Appareil selon la revendication 1 ou 2, caractérisé par le fait que les moyens formant rouleaux comprennent une paire de rouleaux d'étanchéité (24, 26) disposés sur les côtés opposés du passage (16), ledit boîtier ayant une surface plate en vis-à-vis des rouleaux d'étanchéité.

4. Appareil selon la revendication 1 ou 2, caractérisé par le fait que les moyens formant rouleaux comprennent un jeu supérieur et un jeu inférieur de rouleaux, chaque jeu comprenant un rouleau d'étanchéité (24, 26) et un rouleau fixe (50, 52), chaque jeu étant disposé sur les côtés opposés du passage.

5. Appareil selon la revendication 2, caractérisé par un moyen pour déterminer la pression différentielle de part et d'autre de la bande de filtre dans le passage, et un moyen pour commander la vitesse de la bobine débitrice afin de maintenir une pression différentielle constante de part et d'autre de la bande de filtre dans le passage.

6. Appareil selon la revendication 3, caractérisé par un moyen de détection de pression pour déterminer la pression différentielle de part et d'autre de la bande de filtre dans le passage, et un moyen pour commander l'écart entre les rouleaux d'étanchéité et la surface plate afin de maintenir une pression différentielle sensiblement constante de part et d'autre de la bande de filtre dans le passage.

7. Appareil selon la revendication 4, caractérisé par un moyen de détection de pression pour déterminer la pression différentielle de part et d'autre de la bande de filtre dans le passage, et un moyen pour commander l'écart entre le rouleau inférieur d'étanchéité et le rouleau inférieur fixe afin de maintenir une pression différentielle presque constante de part et d'autre de la bande de filtre dans le passage.

8. Appareil selon l'une quelconque des précédentes revendications, caractérisé par le fait que le matériau est un matériau polymère ramolli par la chaleur qui a une viscosité comprise entre 0,2 et 30 kg m⁻¹s⁻¹ (entre 200 cp et 30 000 cp).

9. Appareil selon la revendication 3 ou 4, caractérisé par le fait que l'un au moins des rouleaux est rainuré.

10. Appareil selon la revendication 3 ou 4, caractérisé par le fait qu'un support rotatif de filtre est monté à mi-chemin entre les rouleaux d'étanchéité supérieur et inférieur.

11. Procédé pour filtrer des contaminants d'un matériau, caractérisé en ce qu'il comprend les étapes d'amenée du matériau dans le passage traversant le boîtier de l'appareil conforme à la revendication 1, et d'écoulement du matériau hors du boîtier après qu'il a été filtré.

12. Procédé selon la revendication 11, caractérisé par l'étape de détection de la pression différentielle de part et d'autre de la bande de filtre dans le passage et de réglage de la vitesse de la bande de filtre pour maintenir une pression différentielle pratiquement constante de part et d'autre de la bande de filtre dans le passage.

13. Procédé selon la revendication 11, caractérisé par l'étape de détermination de la pression différentielle de part et d'autre de la bande de filtre dans le passage et de réglage de la vitesse du moyen formant rouleau d'étanchéité pour maintenir une pression différentielle constante de part et d'autre de la bande de filtre dans le passage.

14. Procédé selon la revendication 11, caractérisé en ce que les moyens formant rouleaux comprennent une paire de rouleaux d'étanchéité situés sur les côtés opposés du passage et un organe ayant une surface plate qui est monté en face des rouleaux d'étanchéité, comprenant l'étape de détection de la pression différentielle de part et d'autre de la bande de filtre dans le passage et de réglage de l'écart entre les rouleaux d'étanchéité et la surface plate pour maintenir une pression différentielle constante de part et d'autre de la bande de filtre dans le passage.

15. Procédé selon la revendication 11, caractérisé en ce que les moyens formant rouleaux comprennent un jeu supérieur et un jeu inférieur de rouleaux, chaque jeu contenant un rouleau d'étanchéité et un rouleau fixe, chaque jeu de rouleaux étant situé sur les côtés opposés du passage, comprenant l'étape de détection de la pression différentielle de part et d'autre de la bande de filtre dans le passage et de réglage de l'écart entre le rouleau inférieur d'étanchéité et le rouleau inférieur fixe pour maintenir une pression différentielle constante de part et d'autre de la bande de filtre dans le passage.

16. Procédé selon la revendication 11, caractérisé en ce que le matériau est un matériau polymère ramolli par la chaleur qui a une viscosité comprise entre 0,2 et 30 kg m⁻¹s⁻¹ (entre 200 cp et 30 000 cp).

17. Procédé selon la revendication 14 ou 15, caractérisé par le fait que l'un au moins des rouleaux est rainuré.
